Europäisches Patentamt

European Patent Office

Office européen des brevets

(11) Publication number: **0 428 327 A1**

# EUROPEAN PATENT APPLICATION

(21) Application number: 90312204.2

(22) Date of filing: 08.11.90

(51) Int. Cl.⁵: **G06F 15/80**

(30) Priority: 14.11.89 GB 8925721

(43) Date of publication of application:
22.05.91 Bulletin 91/21

(84) Designated Contracting States:
AT BE CH DE DK ES FR GB GR IT LI LU NL SE

(71) Applicant: **AMT(HOLDINGS) LIMITED**
**65 Suttons Park Avenue**
**Reading Berkshire RG6 1AZ(GB)**

(72) Inventor: **Hunt, David John**
**3 Moores Green**
**Wokingham, Berkshire, RG11 1QG(GB)**

(74) Representative: **Rackham, Stephen Neil et al**
**GILL JENNINGS & EVERY 53-64 Chancery**
**Lane**
**London WC2A 1HN(GB)**

(54) **Processor array system.**

(57) A processor array employs an SIMD architecture and includes a number of sub-arrays (S1...S4). Each sub-array (S1...S4) includes n processor elements (PE). Each processor element is connected to local store including on-chip memory. Each sub-array is connected to a region of off-chip memory by an m-bit wide path, where m is an integer greater than 1. The m-bit wide path is selectively configurable as a one-bit path to or from each of m processor elements or as an m-bit wide path arranged to communicate complete m-bit words of memory data between the region of off-chip memory and respective processor elements.

EP 0 428 327 A1

## PROCESSOR ARRAY SYSTEM

The present invention relates to parallel processing computer systems, and in particular to a system comprising san array of processor elements employing an SIMD architecture. One example of such a system is described and claimed in GB-A-1445714, assigned to the present applicants.

It is known to construct the array of processor elements from a number of sub-arrays or modules formed on separate chips. Each sub-array comprises a number of processor elements and data paths are provided for the communication of data between neighbouring processor elements both within the sub-array and from one sub-array to adjacent sub-arrays. Each processor element has local store associated with it. Part of this local store is provided as on-chip memory integrated with the processing elements on the sub-array. In addition, in order further to increase the memory available to the processor elements without reducing the levels of integration possible in the chip, off-chip memory is used. The off-chip memory is physically separate from the chip bearing the respective sub-array but is provided with connections to all the processor elements on the sub-array so that each processor element sees a region of the off-chip memory as an extension of its local store.

According to the present invention, in a processor array employing an SIMD architecture, the array comprising a number of sub-arrays and each sub-array comprising n processor elements, each processor element being connected to local store comprising on-chip memory, each chip is connected by an m-bit wide path, where m is an integer greater than 1, to a region of off-chip memory, this path being selectively configurable as a one bit path to or from each of m processor elements, or as an m-bit wide path arranged to communicate complete m-bit words of memory data between the region of off-chip memory and respective processor elements.

Preferably m is equal to n and each sub-array is formed on a separate chip.

In conventional processor arrays built from single bit processors, the region of memory associated with each individual processor is also one bit wide so the successive bits of a given data word or number are held in different locations within that memory region. This is known as a 'vertical' storage mode. At a given time every processor accesses the same bit of the data held in its own memory, this set of bits being referred to as a memory plane. For example, in a particular instruction each processor may access the sign bit of a number. However, when the memory of such a processor array is accessed by the MCU, it normally accesses the memory bits that comprise a particular row of a particular memory plane. Thus a word of data written by the MCU is said to be in 'horizontal' storage mode. If such data is to be processed by the processor array it is usually necessary to re-arrange the data into the 'vertical' storage mode described above, the conversion of data between the two storage modes being referred to as 'corner turning'. Such corner turning can be performed by an instruction sequence involving shifting and merging of data, but there is clearly a performance overhead associated with the input of data to the processor array or the return of results from it.

When the processors are byte wide as disclosed in our co-pending application European application, agent's reference 80/3430/02, claiming priority from British application number 8925720.8 and also entitled Processor Array System, the on-chip memory is also byte wide, and successive bytes of each number are similarly held at successive byte wide locations in the memory of a given processor. This may be considered to be a vertical arrangement of bytes, although the bits within each byte are of course accessed and processed in parallel.

Although, as mentioned above, off-chip memory has been used in the past as an extension of the local store the organisation adopted for the off-chip memory has always been the same as that used in the on-chip memory, with the data stored in vertical mode. The present inventor however has discovered that significant advantages can be gained by arranging the off-chip memory in horizontal mode with a word length related to the number of processing elements in the sub-array. Corner turning may then be carried out in transit between the off-chip memory and the processing element using an n-bit shift register.

With the arrangement of the present invention the MCU, that is the scalar processor which controls operation of the array, is able to access an element of a matrix stored in off-chip memory with the same speed as access to a vector element or to a scalar. This provides a significant improvement in the performance of the system when handling matrices.

Preferably the n-bit wide path is also configurable to communicate words of length n/2 or n/4 between the off-chip memory and respective processor elements. Preferably each sub-array is arranged to provide a locally generated address for each word accessed in the off-chip memory.

Preferably the processor array system is connected to a host processor arranged to address the processor array as an extension of its own memory.

When the processor array system is used with a host processor that host processor will generally store data in horizontal mode. Accordingly, providing the sub-array with off-chip memory which similarly uses horizontal mode avoids the need for mode conversion when data is sent from or returned to the host.

With known arrays of single bit processors the off-chip memory address is the same for every processor.

In the present invention, each n bit word accessed in off-chip memory may be associated with a single processor, as already explained. The chip is provided with means whereby the address for each such word may optionally be computed locally within that chip rather than being broadcast globally. This technique is known as 'local indexing', since each processor may thereby supply an address for its own data access. This markedly improves the efficiency of certain categories of operation such a table look up and also, for example, helps with shifting of sheet-mapped oversized arrays.

Preferably the local address generation means include an on-chip address buffer arranged to store one address for each processing element.

Preferably each processing element is arranged to construct a local index address in an associated register and to transfer the address from the associated register to the on-chip buffer to write data to a locally-indexed position in the off-chip memory.

Preferably the associated register is an operand register connected to the arithmetic unit of the respective processing element.

Alternatively, each sub-array may include an on-chip buffer for off-chip memory, the on-chip buffer being arranged to hold memory data words associated with respective processor elements and the operand register of each processor element being arranged to hold an associated local memory address.

Preferably the arithmetic unit is a byte-wide processor and the operand register forms part of a multi-byte shift network having a data output for each byte position and the processing element further includes a multiplexer arranged to communicate data from a selected one of the outputs to the arithmetic unit.

Where a byte or multi-byte shift register is already present in each processing element functioning as an operand register for the ALU, this same register may be used to receive the data words from the off-chip memory, thereby enabling the required functions to be implemented without any further increase in the complexity of the processing element. The use of a shift-register in conjunction with the ALU, and in particular in conjunction with a byte-wide ALU is described in our above cited co-pending application.

A processor array in accordance with the present invention will now be described in further detail with reference to accompanying drawings in which:

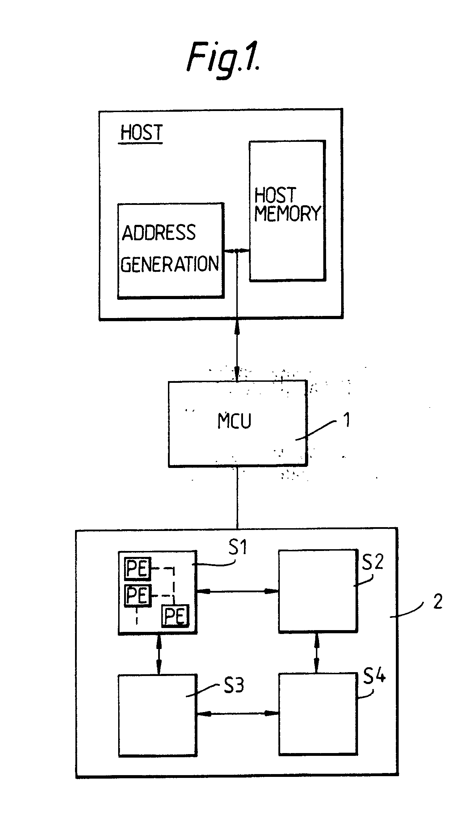

Figure 1 is a block diagram of a processor array system;

Figure 2 is a diagram of a processing element for use in the system of figure 1;

Figure 3 shows one configuration of memory interface for a single sub-array.

Figure 4 shows an alternative configuration of memory interface;

Figure 5 shows a detail of the memory interface when two 16 bit data words are packed into each memory word.

The system of the present invention is described below in the context of a processor array system in which the processing elements include a byte-wide arithmetic unit and a multi-byte shift register. The system of the present invention is however by no means limited to use with this form of system and may, for example, be used with an otherwise conventional array system such as that described and claimed in the above cited patent.

In the present example each module S1-S4 comprises 32 processing elements PE. Each module has associated with it a block of off-chip memory.

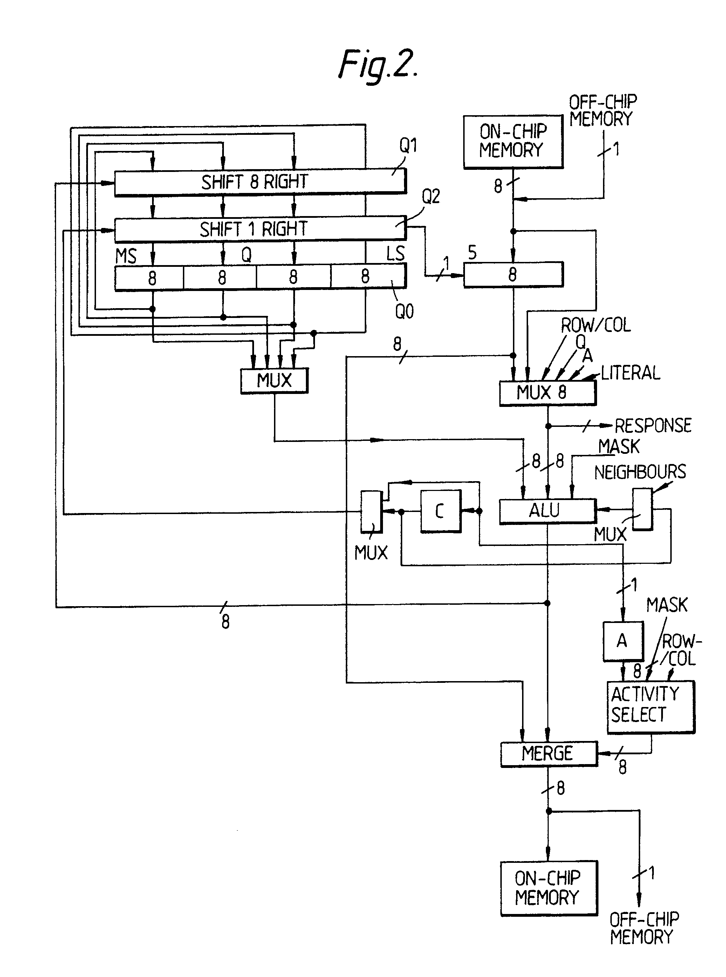

The structure of one processing element is shown in Figure 2. The processing element is arranged to operate on a byte of 8 bits. The processing element includes an 8 bit wide arithmetic unit ALU and 8 bit wide data paths for carrying data between the arithmetic unit ALU and on-chip memory. As described in further detail below, the processing element further includes a four byte wide 32 bit operand shift network Q comprising a byte-wise shift network Q1, a bit-wise shift network Q2 and an output register Q0. The shift networks are formed from appropriately interconnected 2:1 multiplexers. The output from each byte position of the output register Q0 is connected to the corresponding input of the byte-wise shift network Q1 to provide a cyclical data path. Another connection from each output of the output register Q0 goes to a multiplexer MUX which is linked by a byte-wide data path to an input of the arithmetic unit ALU to communicate data from a selected one of the four byte positions of the operand shift network Q. The output of the arithmetic unit ALU is input at one end of the byte-wise shift network Q1 and the single bit carry-output of the arithmetic unit ALU is input at one end of the bit-wise shift network Q2. The data output from the other end of the bit-wise shift register Q2 is taken via a bit-wide data path to one end of an 8-bit shift register S, the "multiplier" register.

3

The different elements of the processing element PE and examples of the use of the processing element PE in carrying out arithmetic operations are described in further detail below.

Memory Paths

This is organised as 8 bits wide and a byte might be read or written in one clock cycle but not both in the same cycle. In practice it is convenient to have at least 512 bits of on-chip memory per PE. For clarity, the on-chip memory is omitted from Figure 2. The read port of the on-chip memory is shown at the top of the figure, and the write port at the bottom.

The PE data paths for the least significant bit are substantially the same as in conventional single-bit processing elements, such as those described in the above cited patent. However for a full set of single-bit operations on the on-chip memory the following additional functions are necessary;

1. On the read port, option to select any bit of the on-chip memory byte and place it on the least significant bit. The other bits on the PE input can be regarded as undefined.

2. On the write port, option to replicate the least significant bit of the ALU output in all the bits. Alternatively this replication may be done in the ALU itself.

3. Option to write just one bit of the byte into on-chip memory. Preferably this is done by gating the writes to individual bits; it may alternatively be done as read-merge-write but this takes longer.

These additional functions listed above are equivalent to providing single-bit access (as well as byte access) to the on-chip memory. In general the bit address used for accessing the memory is different from that used for masking the ALU, since for single bit operation it is always the least significant bit of the ALU that is used.

A one bit wide path from off-chip memory is multiplexed with the least significant bit of the on-chip memory, the other bits as being "don't care" in this case. Similarly, off-chip memory may be written from the least significant bit of the on-chip memory write path.

Q Register

As described above, in the present example the Q register is a 32 bit wide register with shift facilities. In general the length of the Q register is preferably, but not necessarily, matched to the word length of the operands. If, for example, the PE is required to process 48-bit words then Q is preferably at least 48 bits long. It operates like a specialised on-chip memory with simultaneous read and write ports.

It is possible to construct the Q register so that only the least significant byte of the register is used as an ALU operand but input can be made at any byte position. In practice however it is found to be more useful to be able to select any byte as ALU operand but to restrict input to one byte of the register. The Q register may considered to be of length 8, 16, 24 or 32 bits. When emulating the instruction set of existing single-bit arrays, the least significant bit of the most significant byte is used.

The current outputs of the Q register pass in succession through two shift networks:

1. An optional right shift of 8 bits (1 byte) with the ALU output fed in at the MS end. It may be useful also to be able to input the ALU data at the MS byte and pass the other bytes unchanged.

2. An optional right shift of one bit with either the ALU carry output or the value of the register fed in at the MS end. When this is done, the bit shifted out on the right is available to shift in to the S register, i.e. the multiplier register.

The output of the second shifter is always clocked into the Q register. The two shifts may be applied separately or together and either or both may be global or under local activity control.

S Register (Multiplier Register)

The S register is an 8-bit shift register used to hold "old" memory contents for read/write. It is also available as a programmer-visible register used in particular in multiplication. It may be shifted one bit to the right, usually as an extension to the Q register. The least significant bit may be used as a multiplier bit.

Neighbour Input Multiplexer

In general, each processing element will have a data input from each of its four nearest neighbours. The input in general will be one bit wide. The neighbour input multiplexer is not part of the general input multiplexer for each PE as in previous single bit PE designs, but is moved to the carry-in of the arithmetic unit, where the neighbour values are multiplexed with the single bit C register. This arrangement gives greater flexibility of carry propagation than in single bit PEs.

Input Multiplexer

The general input multiplexer functions in a fashion similar to that used in earlier 1-bit arrays, such as that described and claimed in co-pending British application no. 8829622.3 assigned to the present applicant. The multiplexer provides the following options;

1. Q Register. The least significant bit of a selected byte of the Q register on the least significant bit, and zero, i.e. no input, on the other bits. The byte selected for this purpose is the same as is selected for the other ALU input. For response instructions, the most significant byte of Q will normally be used.

2. A register. The inverse of the one-bit register on the least significant bit and zero (i.e. no input) on the other bits. The inverse rather than the non-inverted value is used.

3. Memory input. This is 8-bit data from the on-chip memory read port including the options of either off-chip memory data or a selected bit of the on-chip memory byte, on the least significant bit.

4. S Register. 8 Bits.

5. Row/Column data from the MCU. The least significant bit receives single bit data broadcast from the MCU in the row or column direction. The arrangement is described in our earlier application No. 8829622.3 (AMT Case 2003). This least significant bit may be data written into the PE or memory, or a mask used in row or column selection in the response data. For the latter purpose it is ORed with some other input to the multiplexer. The other bits receive 7-bit data common to all other PE's broadcast from the MCU. Thus an eight bit literal value can in general be used as operand.

6. D Register. The one-bit D register on the least significant bit and zero (i.e. no input) on the other bits. The D register is arranged in a conventional fashion to permit data to be shifted into or out of the array at the same time as processing functions are being performed and is not shown in Figure 2.

The row/column response is taken from the least significant bit of the input multiplexer.

A Register

This functions in a manner similar to that described in the above cited application. The register is loaded from the carryout of the ALU either directly or ANDed ("masked") with the existing A register value. Compatibility with the functions of a conventional single bit array may be provided by generating the appropriate functions for the A register and the carry out of the ls bit of the ALU and masking off the other ALU bits, so that the required value propagates through to the carry output. This arrangement permits also setting activity according to the results of arithmetic tests.

Activity Select

Activity control can apply to the on-chip memory, the off-chip memory, or the shifting or loading of the Q register. At the level of each individual PE, activity control is identical to the corresponding function described in the above cited patents and applications. It provides options for activity to be equal to A or its inverse or to be controlled on a row or column basis. A further level of masking control may be applied to the individual bits of on chip memory. The set of 8 mask bits is common to all PE's and is AND-ed with the above control. This gives the option of writing to an individual bit of a byte or in general to specify a particular bit field within the byte. The mask pattern is generally the same pattern that is used to control the ALU function unless single bit writes to on-chip memory are done by masking. In the present example, activity can also be set according to the ls bit of the S register. As described below, this helps the implementation of the "multiply" function.

C Register

This is one bit wide and may be loaded from the carry borrow output of the ALU. It may be used as carry in to the ALU or as a serial shift input for the Q register.

## ALU

As described above, this is now 8 bits wide, taking a selected byte of the operand register means Q and of the input multiplexer data as input and the C register as carry-in.

A variety of functions are provided. To give maximum flexibility of single bit functions the least significant bit has full function units for both sum and carry outputs. For the other bit positions arithmetic add, subtract and reverse subtract are provided, together with copy of either operand, and a variety of bit-by-bit boolean functions.

The ALU has masking features which permit operations on selected bit fields rather than being constrained to byte boundaries. Thus an 8-bit mask, common to all PE's is applied to the ALU and has the following effect:

If mask bit = 1 normal generation of carry out bit

If mask bit = 0 carry out bit = carry in bit for that bit position.

Result bit: If mask bit = 1 the normal result bit function for that bit is provided at the ALU output. If mask bit = 0 the result value is of no interest, so any value convenient to the implementation may be provided.

Masking the ALU operation may be implemented by explicitly gating the carry propagation in the manner described above, but this may preclude the use of standard carry predict techniques for fast operation of the ALU. An alternative is to achieve the masking by forcing one input of the ALU to 1 and the other to 0, for each bit position where the mask bit is 0.

The mask pattern comprises a consecutive set of truebits specified by a start bit and an end bit. This of course allows selection of a single bit. For operations on a complete byte, the start bit is specified as zero and the end bit as 7. For single-bit operations the least significant bit of the ALU is used, so the start and end bits are both specified as 7. Thus, the carry out of the least significant bit is propagated unchanged through the other ALU bits and may be clocked into C.

During multiply the LS bit of the S register acts as a multiplier and may achieve this by selecting the ALU function as either "copy" or "add" dependent on the local value of that bit. There is also provision for local control to distinguish between add and subtract, for such purposes as non-restoring division. The LS bit of the S register may be used to control this function.

## Merge Function

This is the logic that selects the memory output data as either the ALU output or the old memory contents. It is 8 bits wide and each bit has its own activity select but its function is otherwise the same as in the single bit systems disclosed in the above cited patents and applications. The merge function gives an 8 bit path to the on-chip memory and as already noted the off-chip memory path is taken from the least significant bit.

## Neighbour Paths

The neighbour output (not shown in the Figure) needs to be either the least significant bit of a selected byte of the Q register (for shift functions) or the carry- out of the ALU (for ripple add functions). The memory path may be common with the neighbour output. The selected neighbour input may be used instead of the C register as the carry-in to the ALU.

## D Plane

As in the systems described in the above cited patents, a D-register forming a data plane for Fast Input-Output operations may be used. The D register can be loaded from memory input, or supplied as data on the memory write path. A single bit D register may be used, linked only to the off-chip memory. If the on-chip memory is operated as a cache then I/O data can be cached and D plane transfers to or from

6

the on-chip memory may then be implemented. In the latter case the D register is 8 bits wide.

Example of PE Usage - Unsigned Integer Multiply

The method for unsigned integer multiplication of 32 bit operands, producing a double length product is given below. For ease of description it is assumed that Q is initially zero. Both operands and the result are in the on-chip memory.

For each byte of multiplier
Load multiplier byte into S.
For each bit of multiplier byte
For each byte of multiplicand
Where LS bit of S
Add ls byte of Q register and multiplicand byte from memory
Elsewhere
Copy Q register to ALU output
Endwhere
C is used as carry-in of the add, except on the first pass of the loop.
Carry out is clocked into C. The Q register is shifted one byte to the right, with the ALU result being brought in at the most significant byte position.
On the last pass of this loop, the Q register is shifted one bit right (as well as one byte)with the ALU carry out brought in at the ms bit. The S register is also shifted one place, with the ls bit of Q shifted into the ms bit of S. This puts one completed result bit into S, aligns Q ready for the next multiplier bit, and discards the multiplier bit just used, bringing the next multiplier bit into the correct position.
End For
End For
Store completed result byte from the S register.
End For
For each byte of ms half of result
Store result byte from the appropriate byte of Q.
End For

The conditional add can either be achieved by controlling the ALU function (as assumed in the description above), or by controlling the byte shifting of Q. Note that in the latter case the shift of one place must be done regardless of the multiplier bit.

For 32-bit operands this takes 140 instructions to produce the double length unsigned product. Extra cycles would be needed if the result was to be written under activity control.

In fact this scheme can be applied directly to multipliers of any length, even greater than 32 bits.

If the multiplicand is less than 32 bits then the above code is changed to use a different byte of Q in the addition, and with the bytes in the least significant half of the result being stored from one of the bytes of Q instead of from S.

If the multiplicand is greater than 32 bits, then the above procedure is applied to sections of the multiplicand in turn, each section being of length up to 32 bits. Finally the partial products are added together.

Arbitrary Bit Fields

Operations such as 7 bit addition (for example used in exponent processing for the multiplication of certain formats of real numbers) may be done using masked arithmetic in the ALU. This permits the contents of the C register or zero to be used as carry-in at any bit position, and the carry out from any bit position to be loaded into C. Masking also permits the result to be written to any bit field using a read-merge write sequence similar to that used for normal activity controlled writes.

If the bit field to be combined do not have the same alignment to byte boundaries, then one field can be loaded into the Q register and lined up by successive shifts of one bit before performing the arithmetic operation. Similarly the ALU result could be written back to Q and then aligned to the result space if required, rather than being written direct to memory.

### Neighbour Operations

For ripple add, a carry is taken from the output of the ALU and brought in as the carry-in to the ALU of a neighbouring PE. The operands are typically a byte of the Q register and a memory byte. Using masking, the carry may propagate through any bit field within the ALU. The functionality of previous single-bit arrays maybe modelled by selecting C as the operand at the input multiplexer, and masking of all but the least significant bit of the ALU. For neighbour shifts, the neighbour output is taken from the least significant bit of the selected byte of the Q register. The neighbour input comes in at the ALU carry input and the ALU function is such that this value is reproduced at the function output, and thus maybe written back to Q or to A. A variant of this is for the ALU to propagate the carry-in through the carry-out by appropriate function setting on the least significant bit and by masking of the other bits: simultaneously the Q register is shifted one place right with the ALU carry brought in at the ms end. By repeating this operation, any number of bits in the Q register may be shifted to a neighbouring PE at the rate of one bit per PE per cycle.

### Memory organisation

### External Interface

The details of the processor together with its on-chip memory and the single bit path between each processor and its memory, as described in the preceding paragraphs, provide a great deal of commonality with previously known arrays of single bit processors in that the arrangement of data in the off-chip memory can be the same in the two cases. In particular a boolean matrix can be held in a plane of the off-chip memory and in one instruction loaded into the processor array, each bit of the boolean matrix being loaded into the least significant bit of one of the registers in one processor.

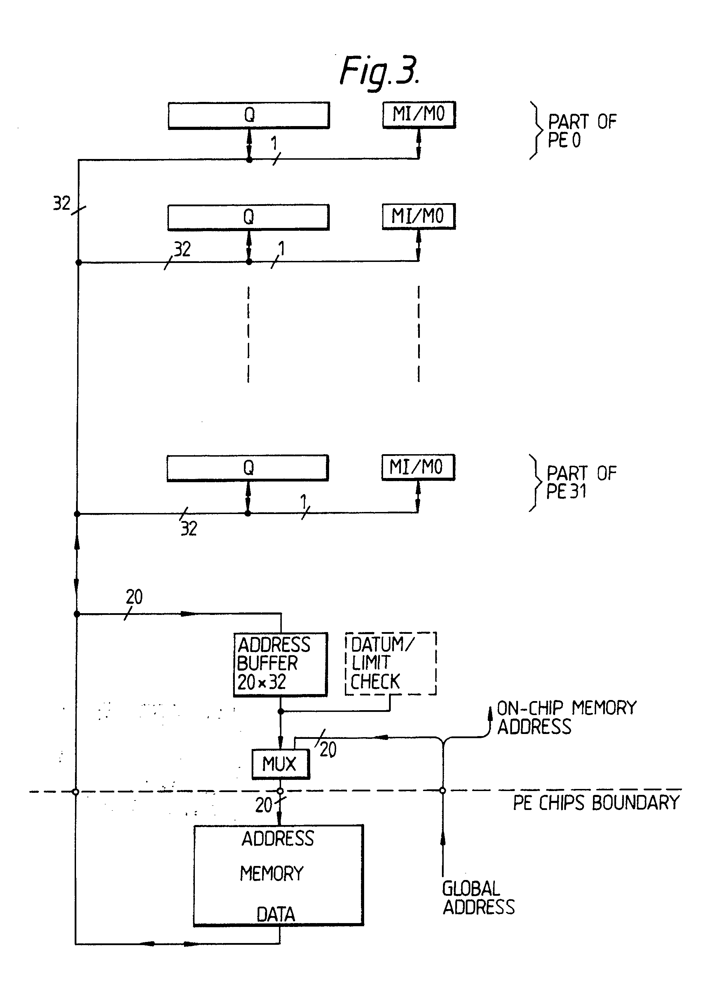

To take advantage of the option of having data held horizontally in off-chip memory, further circuitry is added between the sets of processors (the processor being depicted in figure 2), and the memory pins. One such configuration is shown in figure 3. This shows, as an example, a chip containing 32 processors at the top of the figure, and the region of memory associated with that processor chip at the bottom of the figure. The memory data paths are also 32 bits wide. In practice there would be further memory paths for parity or Error Correcting Codes, dependent on the technology used to implement the memory. This error handling uses conventional techniques, either implemented as part of the memory or on the processor chip, and is not considered further here. For convenience the memory is shown as having bi-directional data paths.

The 32-bit wide data path at the left of figure 3 takes data into or out of the processor chip. It is convenient to number the bits in this data path 0 to 31 in the same way as the processors within the chip. There is a single bit wide connection between bit 0 of the data path and the single bit connections to and from the off-chip memory associated with processor 0; these connections at the processor are shown in figure 2. Similarly data bit 1 is connected to and from processor 1 and so on with data bit 31 connected to and from processor 31. These connections provide access to vertical mode data in the off-chip memory at one bit wide per processor, as well as access to boolean matrices in the off-chip memory.

An alternative memory access mode makes a 32 bit memory connection to the Q register of each processor. For writing to memory all 32 bits of the Q register of a particular processor are gated onto the memory data path at the same time. Typically the Q register of processor 0 would be output to the memory in the first memory write cycle, followed by the Q register of processor 1, and so on through to processor 31. Conventional techniques such as multiplexers or tri-state gating logic are used to put the contents of the chosen Q register onto the data path. Similarly when reading the memory the entire contents of the 32 bit data path are clocked into the Q register of one of the processors, usually processor 0 followed by processor 1 and so on. In order to do this it is necessary to have additional multiplexing at the inputs to the Q registers; this is not shown in figure 2.

The addressing for the off-chip memory is shown near the bottom of figure 3. Usually the address is common to all the regions of memory, and thus to all the processors in the complete array. In this case the address multiplexer selects the global address broadcast from the MCU. For local addressing each processor computes the memory address that it requires, leaving the resulting address in its Q register. Then the addresses are copied one by one into the address buffer, which is part of the processor chip. This buffer may be constructed from a random access memory having 32 words, one word for each processor on the chip, each word being wide enough to hold a complete address for the region of memory associated with that processor chip. In the figure a 20 bit wide address buffer is shown as an example. When performing the locally addressed memory access the address multiplexer selects the output of the address buffer, which thus supplies successive address values to the memory, one for each processor in turn. The data transfers associated with this memory access are performed to or from the processor Q registers as already described. Usually some form of memory protection, such a datum or limit, is needed in computer systems. In the case of local indexing this checking must be provided locally, either by software or, as indicated in the figure, by hardware to check each address as it is presented to the memory.

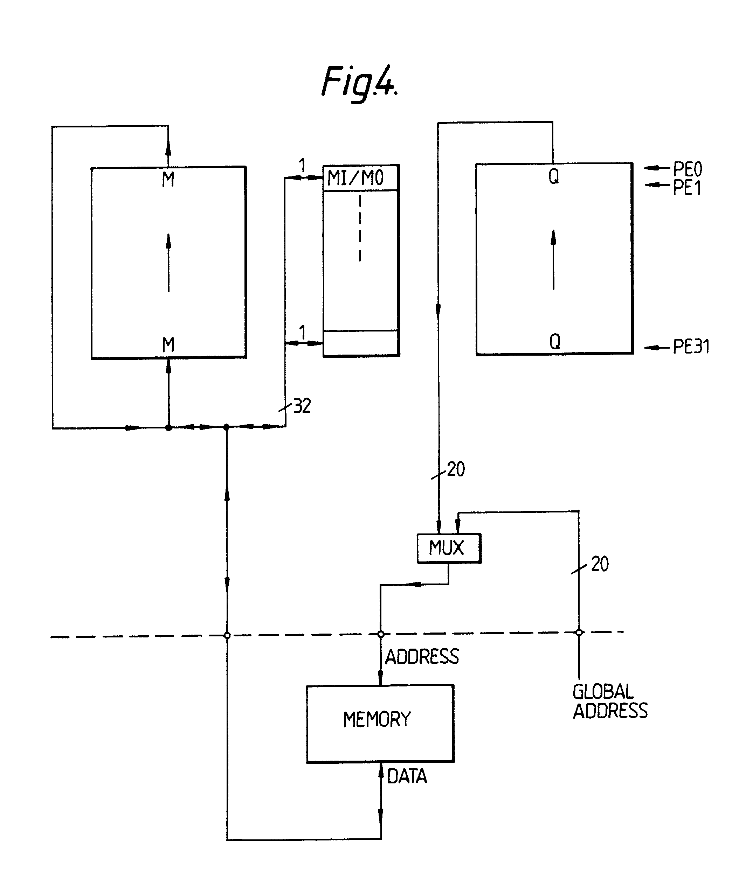

Figure 4 shows an alternative configuration for the memory interface. The memory, global memory address, and the single bit paths to and from each processor are the same as in figure 3. In this case the memory data paths connect to and from a shift register, shown as M in the figure comprising 32 words of 32 bits each. Each 32 bit word of M is associated with one processor. To write to off-chip memory the M register is first loaded with the data. This takes four instructions with each processor loading four successive bytes of its on-chip memory into its section of the M register. Then the contents of the M register are successively shifted out and written to memory. When reading off-chip memory, data is shifted into the M register and then written byte by byte into the on-chip memory. This of course requires an additional input to the processor from a selected byte of the M register.

When local indexing is required, the Q registers of the set of processors are configured as a shift register to supply successive addresses to the memory.

The advantage of the scheme in figure 4 is that, except when local indexing is taking place, it is possible to overlap the operation of the memory and the M register with processing (typically using the ALU, the on-chip memory, the Q register and other registers), thus achieving an increase in overall throughput. It does need more hardware than the scheme of figure 3 since the M register must be 32 bits wide, whereas the address buffer of figure 3 needs only to be wide enough to hold a memory address. Also each processor needs to be able to select a byte of the M register as its data input.

Figure 3 shows the Q registers being randomly addressable for off-chip memory access, and similarly for the address buffer, whereas figure 4 shows the Q registers and the M registers configured as shift registers for this purpose. It will be apparent that as alternative embodiments it is equally possible to have Q and the address buffer configured as shift registers in figure 3, or to have M and Q randomly addressable in figure 4.

The advantages of holding data in off-chip memory in 'horizontal mode' are:-

1. Access from the MCU to an element of a matrix is the same speed as access to a vector element or to a scalar.

2. No mode conversion is needed when data is sent from or returned to the host. Conversion routines should still be called though, since in some cases they are needed to perform format conversions.

The ordering of words in array memory is not necessarily the same as would be natural for a normal memory, but this could be accommodated by including an Address Sequence Engine chip in the host interface. Such an address sequence engine is described and claimed in the applicants' earlier patent GB-B-2130409.

3. Again, no mode conversion is needed for I/O systems but re-ordering at the word (or possibly byte) level is still needed in general, so the current schemes for double buffering and programmable address generation are still highly relevant.

4. When data is being transferred between off-chip memory and on-chip memory, varying the sequence of addresses in the off-chip memory effectively re-arranges the data along the row direction during the transfer operation. The re-arrangement only applies within groups of 32 PEs along each row.

5. Local indexing may be implemented as described, and permits table look up type operations on data within the region of memory associated with the particular processor chip.

In order to illustrate memory accessing using the horizontal mode mapping of arrays, consider the following layout of data in the region of memory associated with a particular processor chip having 32 processors. This memory is assumed to hold row 5 of a Fortran matrix A having 64 columns. Other rows of the matrix are held in the regions of memory associated with other processor chips, and for the purposes of this example it is assumed that there are at least as many processor chips as there are rows of the matrix:

| Memory address | Contents |
|---|---|
| 1000 | A(5,1) |
| 1001 | A(5,2) |
| . | . |
| . | . |
| 1031 | A(5,32) |
| 1032 | A(5,33) |
| . | . |
| . | . |
| 1063 | A(5,64) |

Each line in the table above represents the address and contents of a 32 bit memory word. The addresses are given in decimal and have arbitrarily been shown as starting at 1000.

The following are examples of patterns of memory access and processing:

(a) Straightforward processing of the entire matrix may be done in two halves: columns 1 to 32 of the data, followed by columns 33 to 64, for example. To load the first set of columns into the processor chip the sequence of memory addresses is 1000,1001,1002,...1031, and this results in processor 0 receiving data item A(5,1) and so on. After processing (for example taking the square root of the data value), the results may be written back to the same locations or to a similar set of locations elsewhere in the memory.

(b) Matrix A can be effectively shifted along the row to line it up with some other matrix, for example to perform the following operation over all I and J:

B(I,J) = B(I,J) + A(I,J+3) (for J < 62)

(I,J) = B(I,J) + A(I,J+3—64) (for J > = 62)

The first 32 columns of matrix B are read in normally. Then matrix A is read using the following sequence of addresses: 1003,1004,1005...1034.

For processing the second half of matrix B the addresses for accessing matrix A are: 1035,1036,...1063, 1000,1001,1002.

Note that this re-arrangement of data along the rows takes no longer than the direct access in the first example.

(c) Local indexing can provide a rapid implementation of the following type of operation:

B(I,J) = A(I,Z(I,J))

In this case Z is an integer matrix taking values in the range 1 to 64. Again this is done in two halves corresponding respectively to the first 32 columns of B ( or equivalently of Z), and the second 32 columns of B. The set of Z values is loaded into the processors, their values checked as required, then adjusted by adding 999 everywhere; this is the start address of A, adjusted for the fact that Fortran indexes start at 1. Then the indexed read is performed as previously described, and the result copied to matrix B.

It is thus apparent that this memory organisation provides very fast, or in many cases free, data re-organisation when the data re-organisation is local to the region of memory associated with a given processor chip.

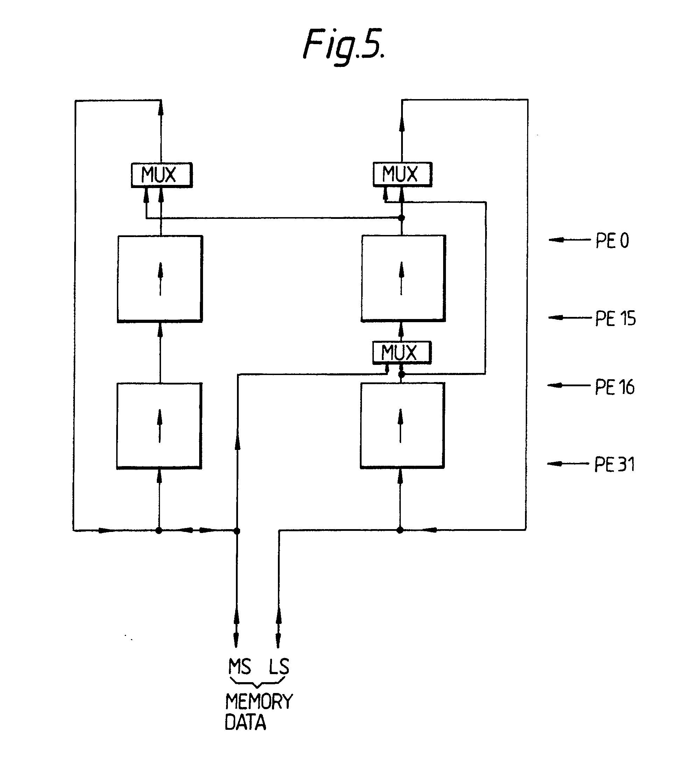

The shift register arrangement of figure 4 can be extended to provide options for input or output of 16 or 8 bit data as well as 32 bit. Figure 5 shows an example of how multiplexers can configure the shift register to deal with either 32 or 16 bit data. The M register is split into four sections of size 16 words of 16 bits. With each multiplexer selecting its right input the effect is the same as in figure 4. For 16 bit data the left input of each multiplexer is selected. the left half of the M register associated with each processor is not used and is left undefined. The effect of the multiplexing is that the most significant halves of the memory words are associated with processors 0 to 15 and the least significant halves with processors 16 to 31. An extension of this multiplexing arrangement allows each memory word to hold four 8 bit values.

## Claims

1. A processor array employing an SIMD architecture, comprising a number of sub-arrays (S1...S4), each sub-array (S1...S4) comprising n processor elements (PE), each processor element being connected to local store including on-chip memory, characterised in that each chip is connected to a region of off-chip memory by an m-bit wide path, where m is an integer greater than 1, selectively configurable as a one-bit path to or from each of m processor elements or as an m-bit wide path arranged to communicate complete m-bit words of memory data between the region of off-chip memory and respective processor elements (PE).

2. An processor array according to claim 1, in which m is equal to n and in which each sub-array is formed on a separate chip.

3. A processor array according to claim 1 or 2, in which the m-bit wide path is configurable to communicate words of length m/2 or m/4 between the off-chip memory and respective processor elements (PE).

4. A processor array according to claim 1, 2 or 3, in which each sub-array includes local address generation means for locally generating an address for each word accessed in the off-chip memory.

5. A processor according to claim 4, in which the local address generation means include an on-chip address buffer arranged to store one address for each processor element (PE).

6. A processor array according to claim 5, in which each processor element is arranged to construct a local index address in an associated register and to transfer the address from the associated register to the on-chip buffer to write data to a locally-indexed position in the off-chip memory.

7. A processor array according to claim 6, in which the associated register is an operand register (Q) connected to the arithmetic unit (ALU) of the respective processor element (PE).7.

8. A processor array according to claim 5, in which each sub-array (S1...S4) includes an on-chip buffer (M) arranged to hold memory data words associated with respective processor elements (PE) and the operand register (Q) of each processor element is arranged to hold an associated local memory address.

9. A processor array according to any one of the preceding claims, in which the arithmetic unit is a byte-wide processor and the operand register (Q) forms part of a multi-byte shift network having a data output for each byte position, the processing element (PE) further comprising a multiplexer arranged to communicate data from a selected one of the outputs to the arithmetic unit (ALU).

10. A computing system comprising a processor array according to any one of the preceding claims, and a host processor connected to the array and arranged to address the processor array as an extension of its own memory.

# Fig.1.

# Fig.2.

# Fig.3.

# Fig.4.

MI/M0

M

M

Q

Q

PE0
PE1

PE31

32

20

MUX

20

ADDRESS

GLOBAL
ADDRESS

MEMORY

DATA

# Fig.5.

PE 0

PE 15

PE 16

PE 31

MS  LS

MEMORY
DATA

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 191 280 (IBM)<br>* Abstract *<br>– – – | 1,2,3 | G 06 F<br>15/80 |
| A | US-A-4 144 566 (THOMSON-CSF)<br>* Figures 5,6; abstract; column 5, lines 65-69; column 6, lines 1-69 *<br>– – – – – | 8,9 | |

TECHNICAL FIELDS SEARCHED (Int. Cl.5)

G 06 F 15
G 06 F 12

The present search report has been drawn up for all claims

| Place of search | Date of completion of search | Examiner |
|---|---|---|
| The Hague | 10 December 90 | BLIONAS S. |